# EUROPÄISCHE PATENTANMELDUNG

(11) **EP 1 346 792 A1**
(43) Veröffentlichungstag der Anmeldung: **24.09.2003**
(21) Anmeldenummer: 02405217.7
(22) Anmeldetag: 21.03.2002
(51) Int. Cl.: B23K 11/31

(54) **Schweiss- bzw. Fügeeinheit**

(71) Anmelder: H.A. SCHLATTER AG, CH-8952 Schlieren Zürich (CH)
(72) Erfinder: Rohner, Jürg, 8909 Zwillikon (CH)
(74) Vertreter: Roshardt, Werner Alfred, Dipl.-Phys.

(57) **Zusammenfassung**

Bei einer Schweiss- bzw. Fügeeinheit (1), insbesondere zum Verbinden von Werkstücken mit beliebigen Raumformen, sind zumindest zwei Werkzeuge (12.1 bis 12.) auf einer Revolvereinheit (3) angeordnet, welche eine zeitoptimiert programmierbare Servoachse aufweist. Die Schweiss- bzw. Fügeeinheit (1) weist weiter eine Aufsetzeinheit (14) und eine Nachsetzeinheit (19) sowie ein daran angeordnetes Werkzeug auf. Durch Drehen der Revolvereinheit (3) wird das für die gewünschte Art von Verbindung ausgestaltete Werkzeug (z. B. 12.1) in Position gebracht und die Herstellung der Verbindung vorgenommen.

## Beschreibung

### Technisches Gebiet

Die Erfindung betrifft eine Schweiss- bzw. Fügeeinheit, insbesondere zum Verbinden von Werkstücken mit beliebigen Raumformen, mit mindestens zwei Werkzeugen, mit einer Aufsetzeinheit zum gesteuerten oder geregelten Aufsetzen der Werkzeuge auf das Werkstück und mit einer Nachsetzeinheit zum Nachsetzen der Werkzeuge.

### Stand der Technik

Aus mehreren Teilen zusammengefügte Werkstücke aus Blech und/oder Draht finden in verschiedenen Einsatzbereichen als Halb- oder Fertigprodukte Anwendung. Dabei handelt es sich zumeist um Werkstücke mit einer beliebigen Raumform, insbesondere einer nichtplanen Ausgestaltung. Weiter sind die Werkstücke aus gleichen oder unterschiedlichen, jedoch miteinander verschweissbaren bzw. zusammenfügbaren Materialien hergestellt.

Oft werden an ein und demselben Werkstück verschiedene Arten von Verbindungen ausgeführt. Beispielsweise werden die einzelnen Teile miteinander zumindest punktuell verschweisst oder zusammengefügt, z. B. miteinander vernietet. Um nicht für jede Art der herzustellenden Verbindung eine Vorrichtung bereitstellen zu müssen, wurden beispielsweise an einer Trageinheit einer Schweissmaschine mehrere Schweisswerkzeugeinheiten nebeneinander angeordnet, wobei jede einzelne dieser Einheiten mit einer separaten Pneumatik ausgerüstet und einzeln angesteuert ist.

Eine Möglichkeit die Einzelteile der Werkstücke miteinander zu verbinden ist das sogenannte Widerstandspressschweissen. Dabei erzielt man eine Erwärmung sich berührender Werkstückteile mit einem hindurchfliessenden elektrischen Strom. Nach Erreichen der Schweisshitze werden die zu verbindenden Werkstückteile an ihrer Berührungsstelle unter Druck vereinigt. Zum Schutz vor der Überhitzung der Schweisswerkzeuge werden diese mit einem geeigneten Kühlmittel gekühlt.

Beim oben genannten Verfahren wird über entsprechend geformte Elektroden Kraft und Strom geführt und die Werkstückteile beispielsweise punktweise miteinander verbunden. Soll eine Nahtschweissung erstellt werden, verwendet man scheibenförmige Elektrodenrollen. Weitere bekannte Elektrodenformen sind Balkenelektroden oder Flachelektroden z. B. zur Herstellung einer Buckelschweissung. Normalerweise ist dabei eine der Elektroden in der Z-Achse verschieblich und die gegenüberliegende Elektrode - auch Gegenelektrode genannt - fest angeordnet.

Das Aufsetzen der beweglichen Schweisswerkzeuge bzw. Elektroden auf das Werkstück wird mit der Aufsetzeinheit gesteuert. Auch bei hohen Produktionsgeschwindigkeiten darf der Aufsetzdruck auf das Werkstück nicht zu hoch sein, damit dieses nicht beim Aufsetzen der Elektrode zu stark verformt wird.

Mit der Anordnung mehrerer nebeneinander angeordneten Schweisswerkzeuge wird neben den zumeist zu berücksichtigenden Achsen (z. B. X-, Y- und Z-Achse) eine zusätzliche Achse geschaffen, welche bei der konstruktiven Ausbildung und bei der Programmierung der Schweissmaschine berücksichtigt werden muss. Dies deshalb, weil die Schweisswerkzeuge entlang ihrer Achse, auf welcher sie nebeneinander angeordnet sind, vor der Herstellung der Schweissung verfahren werden müssen. Weiter können bei der Positionierung der mehreren nebeneinander angeordneten Schweisswerkzeuge und durch die räumliche Ausgestaltung der Werkstücke Kollisionen entstehen, welche bei der Programmierung der Schweissmaschine zu berücksichtigen sind und den Aufwand für die Programmierung zusätzlich erhöhen.

### Darstellung der Erfindung

Aufgabe der Erfindung ist es, eine Schweiss- bzw. Fügemaschine zu schaffen, bei welcher mehrere Werkzeuge auf einer Schweiss- bzw. Fügemaschine angeordnet sind und der Zeitaufwand zur Vermeidung von Kollisionen sowie der Progammieraufwand auch bei in der Raumform komplex ausgebildeten Werkstücken gegenüber den bekannten Lösungen klein ist.

Die Lösung der Aufgabe ist durch die Merkmale des Anspruchs 1 definiert. Gemäss der Erfindung ist eine Schweiss- bzw. Fügeeinheit, insbesondere zum Verbinden von Werkstücken mit beliebigen Raumformen, mit mindestens zwei Werkzeugen, mit einer Aufsetzeinheit zum gesteuerten oder geregelten Aufsetzen der Werkzeuge auf das Werkstück und mit einer Nachsetzeinheit zum Nachsetzen der Werkzeuge versehen. Die mindestens zwei Werkzeuge sind auf zumindest einer Revolvereinheit mit einer zeitoptimiert programmierbaren Servoachse angeordnet.

Durch die Anordnung der zumindest zwei Werkzeuge auf einer drehbaren Revolvereinheit wird die Programmierung sehr viel einfacher. Da die Herstellung der Verbindung relativ zur Tragkonstruktion der Schweiss- bzw. Fügeeinheit immer am gleichen Ort erfolgt, ergibt sich zudem eine optimale innere Stabilität. Das gewünschte Werkzeug wird durch Drehen der Revolvereinheit in Position gebracht. Damit wird die Konstruktion der Schweiss- bzw. Fügeeinheit mit mehreren Werkzeugen einfacher und die Möglichkeit von Kollisionen der Werkzeuge mit den räumlich ausgestalteten Werkstücken bei der Positionierung dieser beispielsweise gegenüber einer Schweissmaschine mit mehreren nebeneinander angeordneten Schweisswerkzeugen reduziert. Unter räumlich ausgestalteten bzw. nichtplanen Werkstücken werden in diesem Zusammenhang im Wesentlichen jede Art von Gitter (z. B. Körbe, Backofengitter, Spezialgitter, usw.) und dreidimensionale Bleche für verschiedenste Anwendungen verstanden, welche eine beliebige Raumform aufweisen können.

Die Bedienung bzw. Programmierung der erfindungsgemässen Schweiss- bzw. Fügeeinheit ist gegenüber einer Lösung mit mehreren nebeneinander angeordneten Verbindungswerkzeugen einfacher, da die räumlich versetzte Anordnung der Werkzeuge bei der Programmierung nicht berücksichtigt werden muss.

Die Revolvereinheit wird vorzugsweise NC-gesteuert (NC = nummerisch gesteuert; engl.= numerically controlled). Bei der NC-Steuerung kann es sich um eine Computer unterstützte Steuerung handeln, eine so genannte CNC-Steuerung. Mit solchen Steuerungen und dem zugeordneten Antrieb (z. B. einem Elektromotor) können die an der Revolvereinheit angeordneten Werkzeuge exakt und beliebig positioniert werden. Entgegen einer Lösung mit einem Klinkenantrieb ist eine gesteuerte Drehung der Revolvereinheit im bzw. gegen den Uhrzeigersinn möglich. In Abhängigkeit der Funktion werden vorzugsweise weitere verfahrbare Elemente der Schweiss- bzw. Fügeeinheit NC- bzw. CNC-gesteuert.

Die Revolvereinheit kann fest oder verfahrbar, bezüglich der Bewegung der Verbindungswerkzeuge in der Z-Achse, an der Schweiss- bzw. Fügeeinheit angeordnet sein. Trägt die Revolvereinheit, beispielsweise bei einer Anordnung von Schweisswerkzeugen, die sogenannten Gegenelektroden, ist sie vorzugsweise unten und fest an der Schweiss- bzw. Fügeeinheit befestigt. Gegenüber - d. h. bezogen auf die Anordnung der Gegenelektrode oberhalb - der durch Drehung der Revolvereinheit ausgerichteten Gegenelektrode ist eine in der Z-Achse verfahrbare Elektrode angeordnet. Mit der Steuerung der Aufsetzeinheit wird die obere Elektrode auf die Oberseite des zu verschweissenden Werkstückteils verfahren. Anschliessend wird die Aufsetzeinheit um einen vorbestimmten Weg weiter in Richtung der Gegenelektrode verfahren, wobei mit der Nachsetzeinheit der benötigte Pressdruck auf die zu verschweissenden Werkstückteile erzeugt wird. Sobald die Aufsetzeinheit den erforderlichen Presskontakt mit dem - in diesem Beispiel - oberen Werkstückteil hergestellt hat, werden beide Elektroden unter Strom gesetzt. Nachdem die gewünschte Schweisshitze an der Berührungsstelle der zu verschweissenden Werkstückteile erreicht ist, ist der Schweissvorgang beendet. Anschliessend wird die obere Elektrode um einen vorbestimmten (vorzugsweise minimalen) Weg zurückgefahren und die zu verschweissenden Werkstückteile werden für die nächste Schweissung in Position gebracht.

Auch wenn die Revolvereinheit beispielsweise Fügewerkzeuge trägt, ist sie vorzugsweise unten und fest an der Schweiss- bzw. Fügeeinheit befestigt. Gegenüber - d. h. bezogen auf die Anordnung des Fügewerkzeugs oberhalb - des durch Drehung der Revolvereinheit ausgerichteten Fügewerkzeugs ist ein in der Z-Achse verfahrbares Gegenwerkzeug angeordnet. Mit der Steuerung der Aufsetzeinheit wird das obere Gegenwerkzeug auf die Oberseite des zu verbindenden Werkstückteils verfahren. Anschliessend wird die Aufsetzeinheit um einen vorbestimmten Weg weiter in Richtung des Fügewerkzeugs verfahren, wobei mit der Nachsetzeinheit der benötigte Pressdruck auf die zu verbindenden Werkstückteile erzeugt wird bis die Verbindung hergestellt ist. Anschliessend wird das obere Gegenwerkzeug um einen vorbestimmten (vorzugsweise minimalen) Weg zurückgefahren, und die zu verbindenden Werkstückteile werden für die nächste Herstellung einer Verbindung in Position gebracht. Beim Toxen oder beim Buckelprägen muss in der Regel auch das untere Werkzeug etwas zurückgezogen werden, damit das bearbeitete Bauteil in der Ebene bewegt werden kann.

Die Revolvereinheit kann auch oben - bezüglich der Z-Achse - angeordnet sein, so dass diese in Z-Richtung verfahrbar und das andere Werkzeug nicht verfahrbar ist. Anderseits kann auch das obere Werkzeug fest, d. h. unverschieblich und das untere Werkzeug in Z-Richtung verfahrbar sein, wobei auch bei einer solchen Ausführung die Revolvereinheit oben oder unten angeordnet werden kann.

Bei der Verwendung der erfindungsgemässen Schweiss- bzw. Fügeeinheit zur Herstellung von Schweissungen muss neben der Zuleitung für Strom jede Elektrode mit einer Zuleitung für ein Kühlmittel (z. B. Wasser) versehen sein, damit die Elektrode nicht überhitzt. Durch die Anordnung von mindestens zwei Elektroden auf der Revolvereinheit muss für diese Elektroden nur eine Hauptzuleitung für Strom und für Kühlmittel angeordnet werden. Die Verteilung zu den an der Revolvereinheit angeordneten Elektroden erfolgt im Kern der Revolvereinheit. Diese Anordnung vereinfacht die konstruktive Ausbildung der Schweiss- bzw. Fügeeinheit beispielsweise gegenüber einer Schweissmaschine mit mehreren nebeneinander angeordneten Schweisswerkzeugen.

Mit der erfindungsgemässen Schweiss- bzw. Fügeeinheit können verschiedenste Arten von Werkstücken und insbesondere Werkstücke mit einer beliebigen Raumform einfach und schnell verbunden werden. Weiter muss ein Werkstück nicht mehrmals in die Schweiss- bzw. Fügeeinheit eingeführt werden, wenn mehrere unterschiedliche Arten von Verbindungen an diesem auf einer Vorrichtung hergestellt werden. Zusätzlich können auf ein und derselben Vorrichtung Schweissungen und Füge- oder Umformungsprozesse durchgeführt werden.

Vorzugsweise wirkt die Nachsetzeinheit auf die Revolvereinheit als Ganzes. Damit muss nicht jedes Werkzeug, z. B. Schweisswerkzeug bzw. jede Elektrode, mit einer Nachsetzeinrichtung versehen sein. Ist die Revolvereinheit auf der Seite des unverschieblich angeordneten Werkzeugs ausgebildet und ist sie bezüglich der Z-Achse unten angeordnet, wirkt die Nachsetzeinheit bevorzugt auf das obere, bewegliche Werkzeug. Ist dagegen die Revolvereinheit in Z-Achse verschieblich und oben angeordnet, so wirkt die Nachsetzeinheit bevorzugt auf die obere Revolvereinheit. Die Nachsetzeinheit kann in einer Variante dazu auch unten angeordnet werden, wenn beispielsweise das untere - immer bezogen auf die Z-Achse - Werkzeug verschieblich ausgebildet ist. Da nicht jedes der an der Revolvereinheit angeordneten Werkzeuge mit einer separaten Nachsetzeinheit versehen ist, ist der konstruktive Aufwand und die damit verbundenen Konflikte massgeblich reduziert, beispielsweise gegenüber einer Schweissmaschine mit nebeneinander angeordneten Schweisswerkzeugen. Bei einer Schweissmaschine mit nebeneinander angeordneten Schweisswerkzeugen ist jedes Elektrodenpaar wie bei einer Schweissmaschine mit nur einem Elektrodenpaar mit einer Nachsetzeinheit versehen.

In einer bevorzugten Ausführung sind zwei Revolvereinheiten vorgesehen, welche die einander zugeordneten Werkzeuge tragen. Die beiden Revolvereinheiten sind vorzugsweise einander gegenüber auf der Z-Achse der Schweiss- bzw. Fügeeinheit angeordnet. Im Sinne der oben gemachten Ausführungen ist eine der Revolvereinheit - zumeist die untere - in Z-Richtung nicht verfahrbar, während die andere Revolvereinheit dementsprechend in der Z-Richtung verfahrbar ausgebildet ist. Die hier erwähnte Verfahrbarkeit bezieht sich auf die Funktion des Zustellens, das voneinander weg und aufeinander zu Fahren der Werkzeuge (was nicht zu verwechseln ist mit der Funktion des Nachsetzens, d.h. des geringfügigen Verschiebens des Werkzeugs während des eigentlichen Fügeprozesses).

Die beiden Revolvereinheiten können, wie auch bei einer Ausführung mit nur einer Revolvereinheit und einem einzelnen gegenüberliegenden Werkzeug, derart ausgerichtet sein, dass die Herstellung der Verbindung in einer beliebigen andern Richtung als in Richtung der Z-Achse erfolgt.

Die Revolvereinheiten weisen bevorzugt je einen Antrieb auf, welcher NC- bzw, CNC-gesteuert ist. Damit können die Revolvereinheiten unabhängig voneinander gedreht und somit die einzelnen Werkzeuge entsprechend den Erfordernissen positioniert werden. In einer Variante dazu werden die Revolvereinheiten von einem gemeinsamen Antrieb bewegt.

Vorzugsweise ist die Aufsetzeinheit durch eine NC-Servoachse gesteuert. Damit kann der Aufsetzvorgang des Werkzeugs mit der Aufsetzeinheit differenzierter gesteuert werden, als es mit einer herkömmlichen Steuerung möglich ist, beispielsweise über eine Pneumatik-Zylinderanordnung. Die Steuerung der Aufsetzeinheit und die auf die zu verbindenden Werkstücke wirkende Kraft kann über das Motorendrehmoment geregelt werden. In einer Variante dazu kann die NC-Steuerung von einem Annäherungssensor oder einem Lagemesssystem unterstützt werden, welcher bzw. welches die geometrischen Gegebenheiten der zu verbindenden Werkstückteile beim Verfahren des beweglichen Werkzeugs berücksichtigt . Mit der NC-Steuerung wird ein sogenanntes "weiches" Aufsetzen des Werkzeugs auf die Oberseite der zu verbindenden Werkstückteile ermöglicht, und unerwünschte Verformungen beim Aufsetzen des Werkzeugs sind weitgehend ausgeschlossen. Ist das verfahrbare Werkzeug eine Schweisselektrode, wird deren Verschleiss infolge des Aufsetzens der Schweisselektrode auf die Oberseite der zu verschweissenden Werkstückteile vermindert.

Ein weiterer Vorteil ergibt sich daraus, dass das verfahrbare Werkzeug nicht nur zwischen zwei vorgegebenen Endpositionen verfahrbar ist, wenn die zu verbindenden Werkstückteile für die nächste Herstellung einer Verbindung umpositioniert werden. Die Zustellbewegung erfolgt zeitoptimal, indem die Aufsetzeinheit nur gerade soweit verfahren wird, dass die zu verbindenden Werkstückteile bewegt und für die nächste Verbindung positioniert werden können. Damit lassen sich höhere Taktraten bei der Herstellung der Werkstücke realisieren, als es mit einer herkömmlichen Steuerung möglich ist. Alternativ zu den beschriebenen Steuerungen kann die Zustellachse auch hydraulisch, piezoelektrisch oder elektromotorisch gesteuert sein.

In einer vorteilhaften Ausführung trägt zumindest eine der Revolvereinheiten vorzugsweise sechs, voneinander verschiedene Werkzeuge, beispielsweise Schweisselektroden. Die Anzahl der vorhandenen Werkzeuge kann in Abhängigkeit der geometrischen Abmessungen der Schweiss- bzw. Fügeeinheit und der Ausgestaltung der herzustellenden Werkstücke variieren. Vorzugsweise ist die Drehbarkeit der Revolvereinheit auch gewährleistet, wenn die zu verbindenden Werkstückteile in der Bearbeitungsebene der Schweiss- bzw. Fügeeinheit eingeführt sind. Eine grosse Anzahl von Werkzeugen an einer Revolvereinheit reduziert die Eintauchtiefe der Werkzeuge in die räumlich ausgestalteten Werkstücke.

Mit der Anordnung von verschiedenen Arten von Werkzeugen und Ausgestaltungen der Schweisselektroden an einer Revolvereinheit können ohne manuellen Wechsel der Werkzeuge an ein und derselben Schweiss- bzw. Fügeeinheit an dem zu bearbeitenden Werkstück auf die Art des Werkzeugs und die Ausgestaltung der Schweisselektroden abgestimmte Verbindungen vorgenommen werden, ohne dass die zu verbindenden Werkstückteile während des Wechsels zwischen den unterschiedlichen Arten von Verbindungen aus der Schweiss- bzw. Fügeeinheit entfernt werden müssen.

Sollen an den zu verbindenden Werkstückteilen zusätzlich Muttern aufgeschweisst werden, ist vorzugsweise mit den zu diesem Zweck ausgebildeten Elektroden eine automatische Zuführung von Schweissmuttern gekoppelt. Diese weist ihrerseits bevorzugt eine mehrkanalige Zuführung auf. Dabei können - bevorzugt automatisch und in Abhängigkeit der entsprechend ausgebildeten Elektrode - unterschiedliche Schweissmuttern der Schweiss- bzw. Fügeeinheit zugeführt und an das entsprechende Werkstückteil angeschweisst werden.

Vorzugsweise sind bei einer Ausführung der Schweiss- bzw. Fügeeinheit mit zwei gegenüberliegenden Revolvereinheiten an beiden die Werkzeuge derart ausgeformt, dass entsprechende Werkzeugpaare (z. B. Elektrodenpaare) gebildet werden können. Mit zwei, bevorzugt unabhängig voneinander, an den Revolvereinheiten angeordneten NC-gesteuerten Motoren werden die Revolvereinheiten gedreht, damit die Werkzeuge in Abhängigkeit der zu erstellenden Verbindung positioniert werden.

Soll hauptsächlich eine bestimmte Art von Verbindungen an einem Werkstück erstellt werden, kann eine Mehrzahl von der auf diese Art von Verbindung abgestimmten Werkzeuge vorgesehen werden. Beispielsweise werden bei einer erfindungsgemässen Schweisseinheit, welche keine anderen Arten von Verbindungen als Schweissungen herstellt, drei Elektroden für Punktschweissungen und jeweils eine Elektrode für andere Arten von Schweissungen jeweils an den Revolvereinheiten angeordnet.

Wird nur eine Art von Verbindungen an dem herzustellenden Werkstück erstellt, sind alle Werkzeuge - entsprechend der gewünschten Art der Verbindung - gleich ausgebildet. Insbesondere bei der Herstellung von Schweissungen kann die Standzeit der Schweiss- bzw. Fügeeinheit sowie auch die Standmenge der Elektroden wesentlich erhöht werden. Ist eine Elektrode abgenützt oder verschmutzt, wird der Revolverstern weitergedreht und die am Umfang des Revolversterns nächste Elektrode wird für die weiteren Schweissungen verwendet. Das gleiche gilt für Fügewerkzeuge, welche nach einer gewissen Nutzungsdauer durch Drehen des Revolversterns ausgetauscht werden können.

Zunehmend weisen die zu verschweissenden Werkstückteile keine für die Schweissung optimal vorbereitete Oberfläche auf, sondern sind beispielsweise in beabsichtigter Weise mit einer Schicht versehen. Problematisch sind insbesondere Werkstückteile mit einer beschichteten Oberfläche (z. B. leicht phosphatbeschichtet oder mit einer teilweise organischen Schicht versehen). Dadurch erhöht sich der Übertragungswiderstand zwischen Elektrode und Blech und es ergibt sich demzufolge ein erhöhter Verschleiss der Elektrode. Auch Verunreinigungen der Oberflächen der zu verschweissenden Werkstückteile können zu einer Abnutzung der Elektrode führen. Eine bevorzugte Möglichkeit, den damit verbundenen Nachteilen hinsichtlich der Standzeit der Maschine zu begegnen, besteht darin, eine spezielle Fräseinheit zum Nachfräsen der Werkzeuge bei laufender Produktion vorzusehen. Die Einzelheiten einer solchen Anordnung werden weiter unten beschrieben.

Mehrere gleiche Elektroden auf einem Revolver können unter Umständen auch dazu beitragen, dass sich die einzelne Elektrode (aufgrund kürzerer Benutzung) weniger stark erhitzt. Bis die ursprünglich verwendete Elektrode wieder zum Einsatz kommt, hat sie sich, infolge der vorgenommenen Kühlung, soweit abgekühlt, dass sie wieder für weitere Schweissungen eingesetzt werden kann, was zu einer höheren Standzeit führt.

Die Werkzeuge der Schweiss- bzw. Fügeeinheit sind beispielsweise Schweisswerkzeuge, mit welchen die zu verbindenden Werkstückteile verschweisst werden. Dabei können deren Schweisselektroden in ihrer Form beispielsweise als quer oder längs ausgerichtete Balkenelektroden, Punktelektroden, usw., oder die Elektroden können zur Herstellung von Buckelschweissungen, zum Anschweissen von Muttern an einem Werkstück, Rollnahtschweissen usw. ausgebildet sein.

Zusätzlich zu oder anstelle der Schweisswerkzeuge können am Revolverstern Fügewerkzeuge vorgesehen werden, welche die zu verbindenden Werkstückteile beispielsweise durch Clinchen oder Toxen zusammenfügen.

(Beim Clinchen bzw. Toxen entsteht die Verbindung zwischen den beiden Werkstücken-z.B. Blechen - durch einen lokalen Umformvorgang. Ein Stempel drückt das Blech in die zugehörige Matrize, wodurch eine druckknopfähnliche Verbindung entsteht. Dabei spielt es keine Rolle, ob die Bleche beschichtet oder oberflächenbehandelt sind, unterschiedliche Dicken haben, aus unterschiedlichen Materialien - z. B. Stahl und Aluminium - sind, oder ob eine Zwischenlage aus Folie oder Papier erforderlich sein sollte.)

Eine weitere Art von Werkzeugen für die Schweiss- bzw. Fügeeinheit sind so genannte Umformungswerkzeuge. Mit diesen werden an bestimmten Stellen die Werkstückteile zumindest punktuell z. B. durch Prägen, Tiefziehen, Biegen usw. umgeformt, so dass die Werkstückteile mechanisch miteinander verbunden werden. Eine vorteilhafte Ausführung der Schweiss- bzw. Fügeeinheit weist zumindest ein Prägewerkzeug auf, welches Buckel für eine nachfolgende Buckelschweissung erstellt, wobei die für die Buckelschweissung benötigten Elektroden an den gleichen Revolversternen angeordnet sind.

Bevorzugt ist die Nachsetzeinheit pneumatisch vorgespannt. Zu diesem Zweck ist vorzugsweise zwischen der Aufsetzeinheit und der Werkzeuganordnung ein Druckbalg angeordnet. Wenn das Werkzeug mit der Aufsetzeinheit auf der Oberseite der zu verbindenden Werkstückteile aufgesetzt wurde, wird diese um einen vorbestimmten Weg weiter in der gleichen Richtung verfahren. Mit dem Druckbalg wird durch das bewegliche Werkzeug der benötigte Pressdruck auf die zu verbindenden Werkstückteile ausgeübt. Der Kraftaufbau ist bei einer solchen Ausführung konstant vorhanden und steht bereits beim Beginn der Herstellung der Verbindung z. B. bei einem Schweissvorgang zur Verfügung. Durch diese Anordnung kann der Strom unverzüglich zwischen den Elektroden fliessen, sobald die Aufsetzeinheit die verfahrbare Elektrode auf der entsprechenden Oberfläche aufgesetzt hat. Damit ist die Zeit des gesamten Schweissvorgangs wesentlich kürzer und es können höhere Taktzahlen erreicht werden als bei einer Schweiss- bzw. Fügeeinheit der bekannten Art.

Der Druckbalg kann mit einer pneumatischen Steuerung versehen werden, welche den Druckbalg mit einem unterschiedlichen Druck beaufschlagen kann. Somit kann die auf das Werkzeug wirkende Kraft entsprechend den Anforderungen in einfacher Art und Weise erhöht oder gesenkt werden.

Anstelle eines Druckbalgs kann ein Druckzylinder mit einer Kolbenanordnung verwendet werden. Der Zylinder befindet sich in einer Tiefdruckstellung, bei welcher der Kolben im unteren Bereich des Zylinders positioniert ist. Da der Zylinder an der Aufsetzeinheit befestigt ist, wird die Kolben-/Zylinderanordnung durch die fortgeführte Bewegung der Aufsetzeinheit zusammengeschoben und der nötige Pressdruck aufgebaut. Eine weitere Möglichkeit ist eine vorzugsweise vorgespannte Feder, welche den nötigen Pressdruck auf das Werkzeug erzeugt, wenn diese mit der Aufsetzeinheit auf das Werkstück gefahren wird.

In einer denkbaren (aber zumeist weniger vorteilhaften) Variante zur Herstellung einer Schweissung kann der Pressdruck während dem Erwärmen der zu verschweissenden Werkstückteile erhöht werden. Sobald die Werkstückteile eine vorgegebene Temperatur erreicht haben, wird der Druckbalg mit Druckluft beaufschlagt. Die Druckerhöhung im Druckbalg erfolgt dabei vorzugsweise schlagartig. Nach Beendigung des Pressvorgangs wird der Druckbalg entlastet und mit der Steuerung der Aufsetzeinheit wird die Aufsetzeinheit mit der Nachsetzeinheit und dem einen Teil der Elektrodenanordnung verfahren, damit die zu verschweissenden Werkstückteile für die nächste Schweissung umpositioniert werden können ("Kraft-Strom-Programm")"Fertigungstechnik 1 + 2" (A. Markowski.

Die Schweiss- bzw. Fügeeinheit weist vorzugsweise ein C-förmiges Traggestell auf, an dessen Enden einerseits eine Revolvereinheit beziehungsweise eine Einzelelektrode fest oder beweglich und andererseits die Aufsetzeinheit in Z-Richtung verschieblich mit der Nachsetzeinheit und einer zweiten Revolvereinheit beziehungsweise nur einem Einzelwerkzeug (z. B. einer Elektrode) angeordnet ist. An diesem Traggestell können die nötigen Zuleitungen für den Strom, die Steuerung, das Kühlmittel, usw. den an den Enden angeordneten Vorrichtungen zugeführt werden. Gleichzeitig wird zwischen den Enden des C-förmigen Traggestells der nötige Freiraum geschaffen, um das zu bearbeitende Werkstück zwischen der Revolvereinheit und der Aufsetzeinheit in allen drei Dimensionen weitgehend frei zu bewegen. Mit dem C-förmigen Traggestell wird eine kompakte Schweiss- bzw. Fügeeinheit geschaffen. Das Handling der Werkstücke erfolgt dabe vorzugsweise mit einem Roboter.

Die Schweiss- bzw. Fügeeinheit hat vorzugsweise drei frei programmierbare NC-Achsen, um beliebige Bewegungen im Raum auszuführen. Durch die frei programmierbaren NC-Achsen können die zu verschweissenden Werkstückteile exakt angefahren und positioniert sowie genau miteinander verbunden werden. Sind die auszuführenden Bewegungen vorbestimmt und es werden keine beliebigen Bewegungen im Raum benötigt, kann die Schweiss- bzw. Fügeeinheit weniger als drei frei programmierbare NC-Achsen aufweisen.

Vorzugsweise ist die Aufsetzeinheit derart angesteuert, dass beim Wechsel der Werkzeuge ein minimaler Hub ausgeführt wird. Durch die bevorzugt eingesetzte NC-Steuerung kann die Aufsetzeinheit um einen beliebig anpassbaren, vorbestimmten Wert verfahren werden. Andererseits kann dieser Wert in Abhängigkeit von der Ausgestaltung des zu bearbeitenden Werkstücks und des zum Einsatz kommenden Werkzeugs variiert werden. Die Steuerung der Aufsetzeinheit erfolgt bevorzugt über eine Kraftregelung in Abhängigkeit des Motorendrehmoments. Eine weitere Möglichkeit ist z. B. die Steuerung über mit ihr verbundene Sensoren oder Lagemesssysteme, welche automatisiert erfolgen kann. Die Optimierung des Fahrwegs äussert sich darin, dass zwischen gewissen Verbindungsvorgängen nur ein Bruchteil des maximal möglichen Hubs gefahren wird. Mit anderen Worten: Die werkstückspezifische Programmierung der Zustellbewegung ist in der Regel so, dass innerhalb eines Produktionszyklus zwischen aufeinanderfolgenden Verbindungen (z. B. Schweissungen) von der Aufsetzeinheit unterschiedliche grosse Hubbewegungen ausgeführt werden. Damit kann eine höhere Produktion gefahren werden, als es bei einer auf einen maximalen Hub ausgelegten Verfahrbarkeit der Aufsetzeinheit möglich ist und die Aufsetzeinheit nur kleine Wege zurücklegen muss.

Dies gilt für alle beweglichen Komponenten der Schweiss- bzw. Fügeeinheit, weshalb vorzugsweise sämtliche beweglichen Teile der Schweiss- bzw. Fügeeinheit NC-gesteuert werden. Die Schweiss- bzw. Fügeeinheit muss jedoch nicht zwingend mit NC-gesteuerten Achsen versehen sein. Sie kann in der Art einer herkömmlichen Schweissmaschine gesteuert werden.

Die Schweiss- bzw. Fügeeinheit weist bevorzugt eine Fräseinheit zum Nachbearbeiten eines ausgewählten, vorübergehend nicht aktivierten Werkzeugs auf. Beispielsweise müssen nach einer gewissen Nutzungsdauer und in Abhängigkeit der zu verschweissenden Materialien oder der Oberflächenbeschichtung der Werkstücke die Elektroden zur Gewährleistung der Qualität der Schweissverbindung nachgefräst werden. Damit die Schweiss- bzw. Fügeeinheit ohne Unterbruch beim Nachfräsen der Elektrode weiter betrieben werden kann, ist die Schweiss- bzw. Fügeeinheit mit einer Fräseinheit ausgerüstet. Diese Fräseinheit ist beispielsweise seitlich der Revolvereinheit angeordnet. Ist eine Elektrode durch das Kühlen auf eine vorbestimmte Temperatur abgekühlt, fräst die Fräseinheit die Elektrodenspitze nach, während gleichzeitig eine andere Elektrode die weiteren Schweissungen am herzustellenden Werkstück vornimmt. Damit kann die erfindungsgemässe Schweiss- bzw. Fügeeinheit ohne Unterbruch infolge des Nachfräsens einer Elektrodenspitze weiterbetrieben werden.

Weist die Schweiss- bzw. Fügeeinheit zwei Revolvereinheiten auf, wird vorzugsweise jeder Revolvereinheit eine separate Fräseinheit zugeordnet. Diese Fräseinheiten sind bevorzugt unabhängig voneinander gesteuert. Es ist jedoch auch denkbar, nur eine Fräseinheit für die Schweiss- bzw. Fügeeinheit mit zwei Revolvereinheiten beispielsweise an einem Roboterarm anzuordnen. Die Fräseinheit wird entsprechend des zu bearbeitenden Werkzeugs ausgerichtet.

Wurde eine Elektrode mehrmals abgefräst, muss zumindest die Kappe der Elektrode ausgewechselt werden. Zu diesem Zweck ist vorzugsweise seitlich von der Revolvereinheit der Schweiss- bzw. Fügeeinheit eine Kappenwechseleinheit zum Auswechseln der Kappe einer Elektrode angeordnet. Die auszuwechselnde Kappe der Elektrode wird mit der Kappenwechseleinheit entfernt und durch eine neue, vorzugsweise aus einem angegliederten Magazin, ersetzt. Zur gleichen Zeit nimmt eine andere, an der Revolvereinheit angeordnete Elektrode die weiteren Schweissungen am herzustellenden Werkstück vor. Damit kann die erfindungsgemässe Schweiss- bzw. Fügeeinheit ohne Unterbruch infolge dem Auswechseln der Kappe einer Elektrode weiterbetrieben werden. Anstelle der Kappenwechseleinheit oder zusätzlich zu dieser kann eine Werkzeugwechseleinheit vorgesehen werden, welche das ganze Werkzeug (z. B. eine Elektrode, ein Füge- oder Umformungswerkzeug) bei Bedarf auswechselt.

Weist die Schweiss- bzw. Fügeeinheit zwei Revolvereinheiten auf, wird vorzugsweise jeder Revolvereinheit eine separate Kappenwechseleinheit bzw. Werkzeugwechseleinheit zugeordnet. Diese Kappenwechseleinheiten bzw. Werkzeugwechseleinheiten sind bevorzugt unabhängig voneinander gesteuert. Es ist jedoch auch denkbar (wenn auch technisch sehr aufwändig), nur eine Kappenwechseleinheit bzw. Werkzeugwechseleinheit für die Schweiss- bzw. Fügeeinheit mit zwei Revolvereinheiten beispielsweise an einem Roboterarm anzuordnen. Die Kappenwechseleinheit bzw. Werkzeugwechseleinheit wird entsprechend des zu bearbeitenden Werkzeugs ausgerichtet. Weiter kann an der gleichen Revolvereinheit je eine Fräseinheit und eine Kappenwechseleinheit bzw. Werkzeugwechseleinheit angeordnet sein.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine perspektivische Detailansicht einer erfindungsgemässen Revolvereinheit;
- Fig. 2: eine Seitenansicht einer Schweiss- bzw. Fügeeinheit mit zwei gegeneinander angeordneten Revolvereinheiten;
- Fig. 3a, b: jeweils eine schematische Skizze einzelner Verfahrensschritte eines Schweissvorgangs;
- Fig. 4a, b, c: eine schematische Skizze der Werkzeuge und eines Werkstückteils für das Prägen von Schweissbuckeln; und
- Fig. 5: eine Seitenansicht einer stationären Schweiss- bzw. Fügeeinheit mit zwei gegeneinander angeordneten Revolvereinheiten und einem Roboterarm für das räumliche Handling des Werkstückteils.

Grundsätzlich sind in den Figuren gleiche Teile mit gleichen Bezugszeichen versehen.

### Wege zur Ausführung der Erfindung

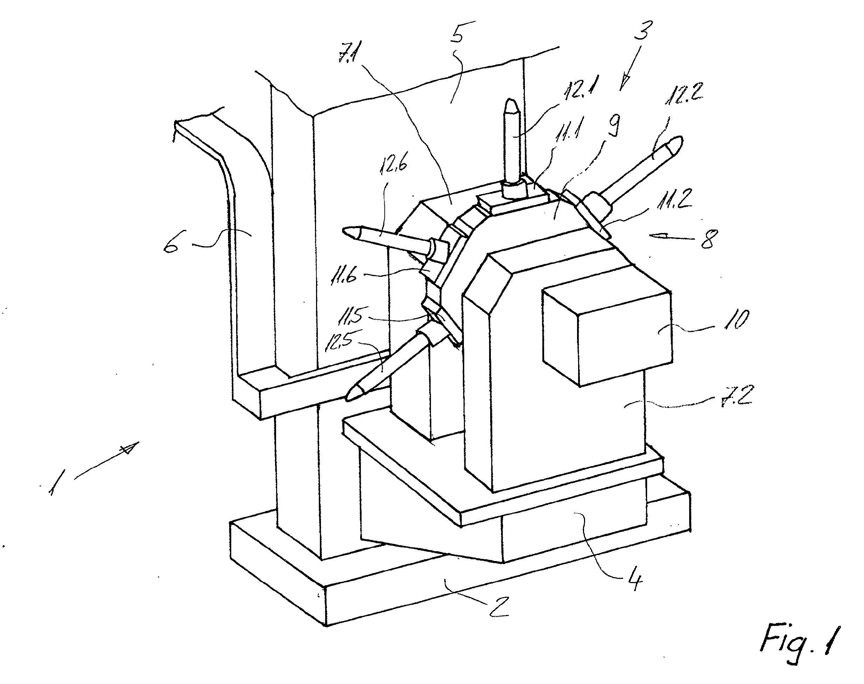

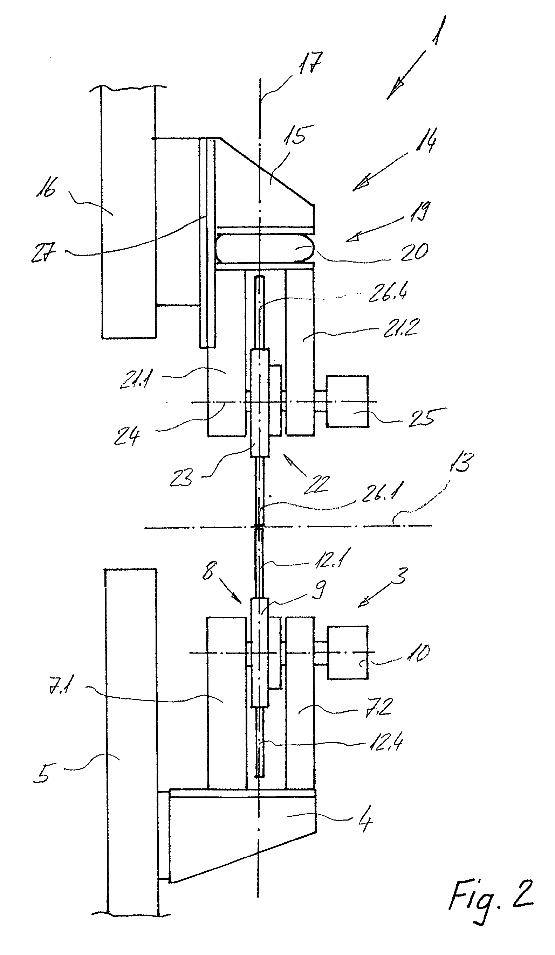

Figur 1 zeigt in einer perspektivischen Detailansicht den unteren Teil 2 einer Schweiss- bzw. Fügeeinheit 1 mit einem C-förmigen Traggestell, an welchem eine erfindungsgemässe Revolvereinheit 3 angeordnet ist und welche zur Herstellung von Schweissungen ausgerüstet ist. Die Revolvereinheit 3 ist auf einer Plattform 4 angeordnet, welche ihrerseits beispielsweise mit Schrauben und Muttern ortsfest an einer vertikalen Halterung 5 befestigt ist. Vorzugsweise ist die Position der Plattform 4 in der Z-Richtung der Schweiss- bzw. Fügeeinheit 1 beispielsweise in einem Raster oder entlang einem Langloch einstellbar, womit die Höhe der Bearbeitungsebene bei Bedarf angepasst werden kann. Die Z-Richtung ist in der Regel vertikal ausgerichtet (vgl. Z-Achse 17 in der Fig. 2). Über das gezeigte Ende des C-förmigen Traggestells wird die Revolvereinheit 3 über die Zuleitung 6 mit Strom versorgt. Zur Kühlung der Schweisswerkzeuge der Revolvereinheit 3 ist zusätzlich eine - hier nicht dargestellte - Zuleitung für Kühlwasser vorgesehen. Durch die zusammengefasste Anordnung der Elektroden 12.1 bis 12.6 an der Revolvereinheit 3 sind die Zuleitungen für den Strom und die Kühlung auf einen zentralen Bereich konzentriert und die Elektroden 12.1 bis 12.6 können durch eine Verteilung in der Revolvereinheit 3 über diesen zentralen Bereich mit Strom und Kühlmittel versorgt werden.

Die Revolvereinheit 3 selbst umfasst zwei parallele, vertikale Halter 7.1 und 7.2, zwischen denen ein Revolverstern 8 drehbar gelagert ist. Der Revolverstern 8 hat einen im Wesentlichen prismatisch ausgestalteten Kern 9, welcher in diesem Ausführungsbeispiel sechs abgeflachte Seitenflächen aufweist. Der Kern ist fest mit einer Welle - hier nicht dargestellt - verbunden, welche von einem NC-gesteuerten Motor 10 angetrieben wird. An jeweils jeder Seitenfläche des Kerns 9 ist eine Basis 11.1 bis 11.6 angeordnet, an welcher die Schweisswerkzeuge - hier die Elektroden 12.1 bis 12.6 - vorzugsweise auswechselbar befestigt sind. An diesem Revolverstern 8 sind aufgrund der geometrischen Abmessungen insgesamt sechs Elektroden 12.1 bis 12.6 angeordnet.

Mit dem NC-gesteuerten Motor 10 wird der Revolverstern 8 vor dem Schweissvorgang in die gewünschte Position gedreht, so dass die zum Einsatz kommende Elektrode 12.1 vorzugsweise senkrecht zur Bearbeitungsebene ausgerichtet ist. Bei diesem Beispiel sind alle angeordneten Elektroden 12.1 bis 12.6 zur Erstellung einer Punktschweissung ausgebildet und gleichartig ausgeformt. Es können zum Erstellen von unterschiedlichen Schweissungen an einem Werkstück auch bis zu sechs unterschiedlich ausgeformte Elektroden am Kern 9 des Revolversterns 8 angeordnet werden. Gegenüber dem Revolverstern 8 ist beispielsweise eine Balken- oder Flachelektrode angeordnet, welche - wie nachfolgend noch beschrieben wird - nur in Z-Richtung verschiebbar ist.

Wie nachfolgend noch aufgezeigt wird, kann gegenüber der Revolvereinheit 3 eine zweite Revolvereinheit 18 (vgl. Fig. 2) angeordnet sein, welche vorzugsweise auf die erste Revolvereinheit 3 abgestimmte Elektroden aufweist. Mit den Elektroden der ersten Revolvereinheit 3 und der zweiten Revolvereinheit 18 werden in einer solchen Ausführung die für die Erstellung der Schweissung benötigten Elektrodenpaare gebildet.

Sollen neben Schweissungen noch andere Arten von Verbindungen auf der Schweiss- bzw. Fügeeinheit 1 ausführbar sein, wird die Anzahl von Elektroden 12.1 bis 12.6 durch die Anzahl der entsprechenden Werkzeuge ersetzt. Dabei kann nur an einer der Revolvereinheiten 3 oder 18 beispielsweise ein Fügewerkzeug oder Umformungswerkzeug angeordnet sein. Durch die bevorzugte Auswechselbarkeit der einzelnen Werkzeuge kann mit ein und derselben Schweiss- bzw. Fügeeinheit 1 ein grosses Spektrum an unterschiedlich verbindenen Werkstückteilen hergestellt werden.

Eine Seitenansicht einer Schweiss- bzw. Fügeeinheit 1 mit zwei gegeneinander angeordneten Revolvereinheiten 3 und 18 zur Herstellung von Schweissungen ist in Figur 2 dargestellt. Die unterhalb - bezogen auf die Darstellung - der Bearbeitungsebene 13 dargestellte Revolvereinheit 3 entspricht der Revolvereinheit 3, welche bereits in der Figur 1 beschrieben wurde. Unter dem Begriff "Bearbeitungsebene" 13 wird nachfolgend die Ebene verstanden, welche durch eine X- und eine Y-Achse gebildet wird. Die Z-Achse 17 verläuft vorzugsweise senkrecht zur Bearbeitungsebene 13. Die oberhalb der Bearbeitungsebene 13 liegende Aufsetzeinheit 14 umfasst eine Halterung 15, welche am oberen Teil des C-förmigen Traggestells (hier nicht dargestellt) an einer vertikalen Halterung 16 zumindest in der Z-Achse 17 z. B. entlang einer Führungsschiene 27 verschieblich befestigt ist, beispielsweise festgeschraubt. Über das C-förmige Traggestell bzw. die vertikale Halterung 17 wird die Revolvereinheit 18 über Zuleitungen (hier nicht dargestellt) mit Strom und Kühlwasser versorgt.

Zwischen der Halterung 15 und der Revolvereinheit 18 ist die Nachsetzeinheit 19 angeordnet. Diese umfasst einen Druckbalg 20, welcher beispielsweise mit Druckluft beaufschlagt ist und den benötigten Pressdruck auf die Revolvereinheit 18 ausübt, um die Schweissung beziehungsweise Umformung zu erstellen, wie nachfolgend noch beschrieben wird.

Die Revolvereinheit 18 selbst umfasst zwei parallele, vertikale Halter 21.1 und 21.2, zwischen denen ein Revolverstern 22 drehbar gelagert ist. Der Revolverstern 22 ist im Wesentlichen wie der Revolverstern 8 aufgebaut. Der Revolverstern 22 hat einen prismatisch ausgestalteten Kern 23, welcher sechs abgeflachte Seitenflächen aufweist. Der Kern 23 ist fest mit einer Welle 24 verbunden, welche von einem NC-gesteuerten Motor 25 angetrieben wird. An jeweils jeder Seitenfläche des Kerns 23 ist eine Basis angeordnet, an welcher die Schweisswerkzeuge - hier die Elektroden 26.1 bis 26.6 - vorzugsweise auswechselbar befestigt sind. Die Anzahl der am Revolverstern 22 angeordneten Elektroden 26.1 bis 26.6 stimmt vorzugsweise mit der Anzahl der am Revolverstern 8 angeordneten Elektroden 12.1 bis 12.6 überein. In diesem Ausführungsbeispiel sind jeweils sechs Elektroden 12.1 bis 12.6 bzw. 26.1 bis 26.6 an den Revolversternen 8 und 22 für eine Punktschweissung angeordnet.

Mit dem Motor 25 wird der Revolverstern 22 vor dem Schweissvorgang in die gewünschte Position gedreht. Bei diesem Ausführungsbeispiel sind alle vorhandenen Elektroden 26.1 bis 26.6 für eine Punktschweissung ausgebildet und gleichartig ausgeformt. Werden beispielsweise am Revolverstern 8 unterschiedlich ausgestaltete Elektroden angeordnet, sind die Elektroden 26.1 bis 26.6 auf die am Revolverstern 8 vorhandenen Elektroden 12.1 bis 12.6 ausgebildet und vorzugsweise auf diese abgestimmt. Wie bereits zum Revolverstern 8 ausgeführt wurde, kann die Schweiss- bzw. Fügeeinheit 1 nur einen Revolverstern 8 bzw. 22 umfassen, welchem beispielsweise eine nur in der Z-Achse 17 verschiebliche oder eine ortsfeste Balken- oder Flachelektrode gegenüberliegend angeordnet ist. Weiter sind andere Werkzeuge z. B. für Füge- oder Umformungsprozesse an den Revolversternen 8 und 22 anbringbar.

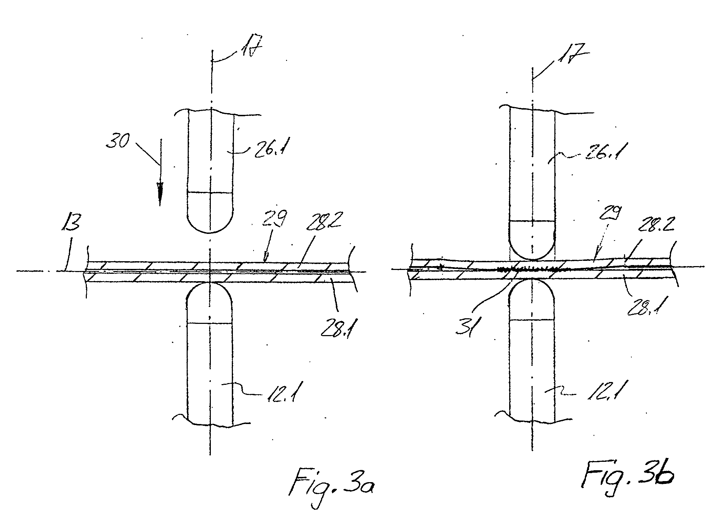

Nachfolgend wird anhand den schematischen Skizzen (Figuren 3 a und 3 b) die Funktion der einzelnen Bestandteile der erfindungsgemässen Schweiss- bzw. Fügeeinheit zur Herstellung einer Schweissung beschrieben. Es sollen in diesem Beispiel zwei Werkstückteile 28.1 und 28.2 durch mehrere Punktschweissungen miteinander verbunden werden.

Die untere Revolvereinheit (3 in Fig. 2) wird - sofern nötig - vorgängig auf die Höhe der Bearbeitungsebene 13 zugestellt und wird anschliessend in der Z-Achse 17 lagegeregelt gehalten. Weiter wird der Revolverstern (8 in Fig. 2) solange gedreht, bis die Elektrode 12.1, welche als Gegenelektrode dient, senkrecht zur Bearbeitungsebene 13 steht. Die Elektrode 26.1 der Revolvereinheit (18 in Fig. 2) wird entsprechend der Ausrichtung der Elektrode 12.1 durch Drehen des Revolversterns (22 in Fig. 2) senkrecht zur Bearbeitungsebene 13 ausgerichtet, so dass die Elektroden 12.1 und 26.1 vorzugsweise auf einer Linie (hier auf der Z-Achse 17) zu liegen kommen. Die Elektrode 26.1 ist mit der Aufsetzeinheit (14 in Fig. 2) in der Z-Achse 17 verschiebbar ausgebildet.

In der Figur 3a ist die Elektrode 26.1 zu Beginn des Pressschweissvorgangs in einer oberen Ausgangsstellung, in welcher die zu verbindenden Werkstückteile 28.1 und 28.2 zwischen den Elektroden 12.1 und 26.1 positioniert werden können. Sobald die Positionierung der zu verbindenden Werkstückteile 28.1 und 28.2 in der Bearbeitungsebene 13 abgeschlossen ist, wird die Elektrode 26.1 mit der NC-gesteuerten Aufsetzeinheit (14 in Fig. 2) beispielsweise entlang der Führungsschiene (27 in Fig. 2) in Richtung des Pfeils 30 abgesenkt, bis die Spitze der Elektrode 26.1 auf der Oberseite 29 des Werkstückteils 28.2 zu liegen kommt. Anschliessend wird die Aufsetzeinheit (14 in Fig. 2) weiter in Richtung des Pfeils 30 verfahren bis der benötigte Pressdruck auf die Revolvereinheit (18 in Fig. 2) wirkt. Durch den Druckbalg (20 in Fig. 2) bleibt der sofort vorhandene Pressdruck während des ganzen Schweissvorgangs aufrechterhalten.

Stehen beide Spitzen der Elektroden 12.1 und 26.1 mit den zu verschweissenden Werkstückteilen 28.1 und 28.2 in Kontakt - wie es in der Figur 3 b dargestellt ist - werden die Elektroden 12.1 und 26.1 unter Strom gesetzt, wobei die zu verschweissenden Werkstückteile 28.1 und 28.2 an dem Berührungspunkt auf die zur Schweissung benötigten Temperatur erwärmt werden und die Schweissung beim Erreichen des benötigten Temperaturniveaus erfolgt. Der Druck wird solange auf der Elektrode 26.1 aufrechterhalten, bis die Schweissung 31 zwischen den beiden Werkstückteilen 28.1 und 28.2 erstellt ist. Die Aufsetzeinheit (14 in Fig. 2) wird um den gewünschten beziehungsweise benötigten Betrag entlang der Führungsschiene (27 in Fig. 2) hochgefahren. Dieser Betrag wird derart gewählt, dass die zu verschweissenden Werkstückteile für die nächste Schweissung umpositioniert werden können, aber der verfahrene Weg der Aufsetzeinheit (14 in Fig. 2) vorzugsweise so klein wie möglich ist. Beispielsweise wird die Aufsetzeinheit (14 in Fig. 2) nur um einen Bruchteil des maximal möglichen Hubs oder nur um wenige Millimeter verfahren. In der Folge wird der beschriebene Vorgang für die weiteren Schweissungen wiederholt. Während den einzelnen Verfahrensschritten werden die Elektroden 12.1 bis 12.6 bzw. 26.1 bis 26.6 fortlaufend mit Kühlwasser gekühlt, damit diese nicht überhitzen.

Wenn die Elektrodenspitzen der für die Schweissung verwendeten Elektroden abgenutzt oder durch Absonderungen des Materials der zu verschweissenden Werkstückteile verschmutzt sind, wird mit dem Motor 10 bzw. 25 der mit diesen verbundene Revolverstern 8 bzw. 22 um eine oder mehrere Elektroden je nach Bedarf beliebig in oder gegen den Uhrzeigersinn weitergedreht. Die zu den Figuren 3 a und 3 b beschriebenen Verfahrensschritte werden anschliessend mit den nun senkrecht zur Bearbeitungsebene 13 ausgerichteten Elektroden (z. B. mit den Elektroden 12.2 und 26.2) wiederholt.

Anstatt die Aufsetzeinheit (14 in Fig. 2) mit dem Motorendrehmoment zu steuern, kann die NC-Steuerung mit einem Sensor gekoppelt sein, insbesondere wenn die Materialdicke oder Oberflächenausgestaltung der zu verschweissenden Werkstückteile 28.1 und 28.2 variiert. Mit einer solchen Ausführung kann die Spitze der Elektrode 26.1 auf der Oberseite 30 in Abhängigkeit der Materialdicke der zu verschweissenden Werkstückteile 28.1 und 28.2 sanft aufgesetzt werden.

Beispielsweise seitlich neben den Revolversternen 8 und 22 können so genannte Fräseinheiten (hier nicht dargestellt) angeordnet werden, welche die Elektroden 12.1 bis 12.6 bzw. 26.1 bis 26.6 bei Bedarf abfräsen und damit eine einwandfreie Qualität der erstellten Schweissungen über einen längeren Zeitraum gewährleisten, ohne dass die Schweiss- bzw. Fügeeinheit 1 die Produktion der Werkstücke während dem Abfräsvorgang unterbrechen muss. Die Häufigkeit dieses Abfräsvorgangs ist in erster Linie von den zu verschweissenden Materialien und der Einsatzdauer der Anzahl der erstellten Schweissungen pro Elektrode abhängig.

Zusätzlich zur Fräseinheit beziehungsweise als separate Einrichtung kann beispielsweise seitlich neben den Revolversternen 8 und 22 eine Kappenwechseleinheit angeordnet werden. Nach einer gewissen Anzahl von Abfräsungen muss zumindest die Kappe der Elektroden ausgewechselt werden. Die Kappenwechseleinheit kann wie die Fräseinheit in die erfindungsgemässe Schweiss- bzw. Fügeeinheit 1 integriert werden. Mit einer solchen Anordnung können einzelne Kappen der Elektroden ausgewechselt werden, ohne dass eine Unterbrechung in der Produktion stattfindet. Anstelle der Kappenwechseleinheit oder in Kombination mit dieser kann eine Werkzeugwechseleinheit vorhanden sein, welche das gesamte, verbrauchte Werkzeug auswechselt und durch ein neues Werkzeug ersetzt. Auch dieser Vorgang kann ohne eine Unterbrechung in der Produktion stattfinden.

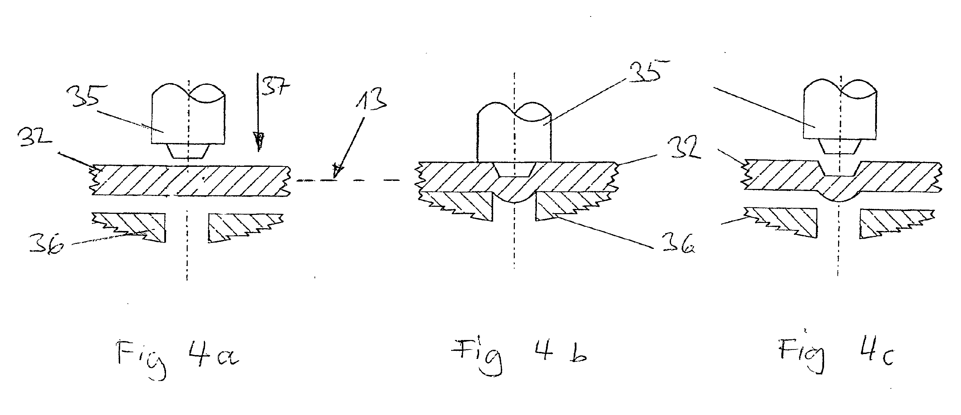

Nachfolgend wird anhand der Prinzipdarstellung in Figur 4 a bis 4 c der Ablauf beim Buckelprägen mit der erfindungsgemässen Schweiss- bzw. Fügeeinheit dargestellt. Anstelle der bisher beschriebenen Elektroden sind an den Revolversternen beziehungsweise - wenn vorhanden - an der stationären Einheit Werkzeuge 35 und 36 angeordnet, welche zur Herstellung eines Buckels in einem Blech geeignet sind.

Der zu bearbeitende Werkstückteil 32 wird zwischen die beiden Werkzeuge 35 und 36 gebracht. Ähnlich wie im Zusammenhang mit der Figur 3a in Bezug auf die obere Elektrode ausgeführt wurde, ist das obere Werkzeug 35 (Patrize) zu Beginn des Prägevorgangs in einer oberen Ausgangsstellung, welche zum unteren Werkzeug 36 (Matrize) genügend Abstand hat, um den Werkstückteil 32 zwischen den Werkzeugen 35 und 36 zu positionieren. Sobald die Positionierung des zu bearbeitenden Werkstückteils 32 in der Bearbeitungsebene 13 abgeschlossen ist, wird das obere Werkzeug 35 mit der NC-gesteuerten Aufsetzeinheit (14 in Fig. 2) beispielsweise entlang der Führungsschiene (27 in Fig. 2) in Richtung des Pfeils 37 abgesenkt und das untere in vergleichbarer Weise angehoben. Zum Umformen wird dann der erforderliche Prägedruck aufgebracht (Fig. 4b).

Ist die Verformung abgeschlossen, wird die Aufsetzeinheit (14 in Fig.2) um den gewünschten beziehungsweise benötigten (vorzugsweise minimalen) Betrag entlang der Führungsschiene (27 in Fig. 2) hochgefahren (Fig. 4c). Das Werkstück kann umpositioniert werden und die nächste Prägung kann angebracht werden.

Beim Durchsetzfügen (Clinchen) bzw. Druckfügen (Toxen) wird in an sich ähnlicher Weise vorgegangen mit dem Unterschied, dass die Werkzeugspitzen anders geformt sind und dass zwei Werkstücke übereinander zwischen die Werkzeuge eingeführt und bearbeitet werden.

Wenn andere Arten von Verbindungen z. B. Schweissungen an den Werkstückteilen hergestellt werden sollen, wird mit dem Motor 10 bzw. 25 der mit diesen verbundene Revolverstern 8 bzw. 22 um ein oder mehrere Werkzeuge je nach Bedarf beliebig im oder gegen den Uhrzeigersinn weitergedreht. Sobald die entsprechenden, gegenüberliegenden Elektroden ausgerichtet sind, wird z.B. das in den Figuren 3 a und 3 b beschriebene Verfahren wiederholt.

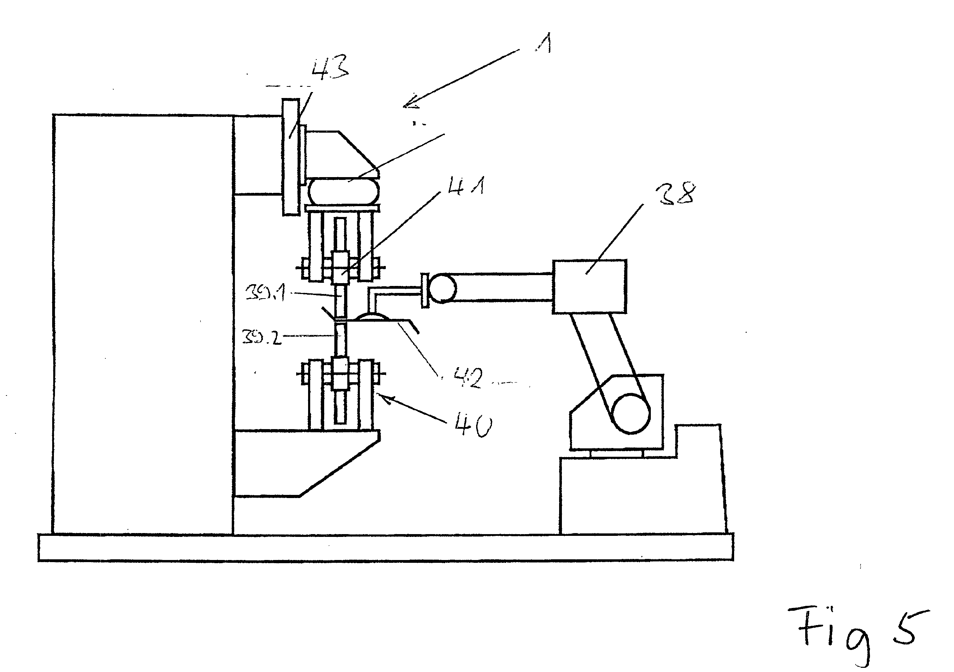

Figur 5 zeigt eine Seitenansicht einer Schweiss- bzw. Fügeeinheit mit zwei gegeneinander angeordneten Revolvereinheiten 40 und 41 und einem Roboterarm 38. Anstelle eines Bearbeitungstisches, dessen Tischfläche im Wesentlichen die Bearbeitungsebene (13 in den Figuren 2, 3 und 4) bildet, können die zu verbindenden Werkstückteile 42 mit einem Roboterarm 38 in die Schweiss- bzw. Fügeeinheit 1 eingeführt, positioniert und nach der Herstellung einer Verbindung umpositioniert werden. Ein solcher Roboterarm 38 kann beispielsweise sechs Achsen aufweisen und somit das herzustellende Werkstück weitgehend frei bewegen. Der Bewegungsfreiraum ist nur durch die Konstruktion der Schweiss- bzw. Fügeeinheit 1 bzw. deren Positionierung zum Roboterarm 38 eingeschränkt. Die Z-Achse 43 ermöglicht die Zustellbewegung mit dem gewünschten Hub. Dadurch wird eine grössere Flexibilität ermöglicht, als sie mit einem Bearbeitungstisch gegeben ist, da die zu verbindenden Werkstückteile auch schräg zwischen den Werkzeugpaaren 39.1 und 39.2 positioniert werden können. Weiter kann die Programmierung des Roboterarms 38 durch ein sogenanntes "teaching" erfolgen, was den Programmieraufwand gegenüber einer rein nummerischen Programmierung in einem erheblichen Mass reduziert. Der Roboterarm 38 kann derart aufgestellt sein, dass mehrere Schweiss- bzw. Fügeeinheiten oder Zwischenlager im Produktionsablauf miteinander verkettet werden.

Anstatt gleichartig ausgebildete Elektroden 12.1 bis 12.6 bzw. 26.1 bis 26.6 und sonstige Arten von Werkzeugen können unterschiedliche Werkzeugformen an den Revolversternen 8 und 22 angeordnet werden. Beispielsweise sind an jedem Revolverstern 8 bzw. 22 je drei Elektroden für eine Punktschweissung, je eine Elektrode für eine Mutternschweissung und je zwei beispielsweise unterschiedliche Balken- bzw. Flachelektroden z. B. für Buckelschweissungen angeordnet. Durch die NC-Steuerung der Motoren 10 und 25 können die Revolversterne 8 und 22 je nach gewünschter Art der Schweissung im oder gegen den Uhrzeigersinn positioniert werden, ohne dass die - in diesem Ausführungsbeispiel - zu verschweissenden Werkstückteile aus der Schweiss- bzw. Fügeeinheit 1 entfernt werden müssen. Werden an der Schweiss- bzw. Fügeeinheit 1 zwei Revolvereinheiten 3 und 18 angeordnet, sind vorzugsweise die Werkzeuge an den entsprechenden Revolversternen 8 und 22 derart aufeinander abgestimmt, dass jeweils zusammengehörende Werkzeugpaare gebildet werden können.

Weiter kann die Nachsetzeinheit 19 anstelle eines Druckbalgs 20 einen oder mehrere Druckzylinder aufweisen, welche den gewünschten Pressdruck auf die zu verschweissenden Werkstückteile ausüben, beispielsweise durch Beaufschlagung mit Druckluft oder einer Hydraulikflüssigkeit.

Zusammenfassend ist festzustellen, dass mit der erfindungsgemässen Schweiss- bzw. Fügeeinheit Werkstücke mit beliebigen Raumformen mit gleichartigen oder unterschiedlichen Verbindungen verbunden werden können, ohne einen komplizierten Aufbau der Schweiss- bzw. Fügeeinheit und ohne dass ein hoher Programmierungsaufwand gegeben ist. Unterschiedliche Arten von Verbindungen (z. B. geschweisste, zusammengefügte oder umgeformte Verbindungen) können in einfacher Art auf einer Vorrichtung durchgeführt werden.

## Patentansprüche

1. Schweiss- bzw. Fügeeinheit, insbesondere zum Verbinden von Werkstücken mit beliebigen Raumformen, mit mindestens zwei Werkzeugen (12.1 bis 12.6 bzw. 26.1 bis 26.6), mit einer Aufsetzeinheit (14) zum gesteuerten oder geregelten Aufsetzen der Werkzeuge (12.1 bis 12.6 bzw. 26.1 bis 26.6) auf das Werkstück und mit einer Nachsetzeinheit (19) zum Nachsetzen der Werkzeuge (12.1 bis 12.6 bzw. 26.1 bis 26.6), **dadurch gekennzeichnet, dass** die mindestens zwei Werkzeuge (12.1 bis 12.6 bzw. 26.1 bis 26.6) auf zumindest einer Revolvereinheit (8 bzw. 22) mit einer zeitoptimiert programmierbaren Servoachse angeordnet sind.

2. Schweiss- bzw. Fügeeinheit nach Anspruch 1, **dadurch gekennzeichnet, dass** die Nachsetzeinheit (19) auf die Revolvereinheit (22) als Ganzes wirkt.

3. Schweiss- bzw. Fügeeinheit nach Anspruch 1 oder 2, **dadurch gekennzeichnet, dass** zwei Revolvereinheiten (3 und 18) vorgesehen sind, welche die einander zugeordneten Werkzeuge (12.1 bis 12.6 bzw. 26.1 bis 26.6) tragen.

4. Schweiss- bzw. Fügeeinheit nach Anspruch 1 oder 2, **dadurch gekennzeichnet, dass** die Aufsetzeinheit (14) durch eine NC-gesteuert programmierbare Servoachse gesteuert ist.

5. Schweiss- bzw. Fügeeinheit nach einem der Ansprüche 1 bis 3, **dadurch gekennzeichnet, dass** zumindest eine der Revolvereinheiten (3 bzw. 18) vorzugsweise sechs, voneinander verschiedene Werkzeuge (12.1 bis 12.6 bzw. 26.1 bis 26.6) trägt.

6. Schweiss- bzw. Fügeeinheit nach einem der Ansprüche 1 bis 3, **dadurch gekennzeichnet, dass** zumindest eine der Revolvereinheiten (3 bzw. 18) mehrere gleiche Werkzeuge (12.1 bis 12.6 bzw. 26.1 bis 26.6) trägt.

7. Schweiss- bzw. Fügeeinheit nach Anspruch 5 oder 6, **dadurch gekennzeichnet, dass** die Werkzeuge Schweisswerkzeuge (12.1 bis 12.6 bzw. 26.1 bis 26.6) und/oder Fügewerkzeuge sind.

8. Schweiss- bzw. Fügeeinheit nach einem der Ansprüche 1 bis 7, **dadurch gekennzeichnet, dass** die Nachsetzeinheit (19) pneumatisch gesteuert ist.

9. Schweiss- bzw. Fügeeinheit nach einem der Ansprüche 1 bis 8, **dadurch gekennzeichnet, dass** sie ein C-förmiges Traggestell aufweist, an dessen Enden (2) die mindestens eine Revolvereinheit (3) und die Aufsetzeinheit (14) angebracht sind.

10. Schweiss- bzw. Fügeeinheit nach einem der Ansprüche 1 bis 9, **dadurch gekennzeichnet, dass** sie drei frei programmierbare NC-Achsen hat, um beliebige Bewegungen im Raum auszuführen.

11. Schweiss- bzw. Fügeeinheit nach einem der Ansprüche 1 bis 10, **dadurch gekennzeichnet, dass** die Aufsetzeinheit (14) derart angesteuert ist, dass beim Wechsel der Werkzeuge (12.1 bis 12.6 bzw. 26.1 bis 26.6) ein minimaler Hub ausgeführt wird.

12. Schweiss- bzw. Fügeeinheit nach einem der Ansprüche 1 bis 11, **dadurch gekennzeichnet, dass** sie eine Fräseinheit zum Nachbearbeiten eines ausgewählten, vorübergehend nicht aktivierten Werkzeugs (12.1 bis 12.6 oder 26.1 bis 26.6) aufweist.

13. Schweiss- bzw. Fügeeinheit nach einem der Ansprüche 1 bis 12, **dadurch gekennzeichnet, dass** sie eine Kappenwechseleinheit zum Auswechseln einer Kappe eines Werkzeugs (12.1 bis 12.6 oder 26.1 bis 26.6) und/oder eine Werkzeugwechseleinheit zum Auswechseln eines Werkzeugs (12.1 bis 12.6 oder 26.1 bis 26.6) aufweist.
